# EUROPÄISCHE PATENTSCHRIFT

(11) **EP 3 728 893 B1**
(45) Veröffentlichungstag und Bekanntmachung des Hinweises auf die Patenterteilung: **19.07.2023**
(21) Anmeldenummer: 18826965.8
(22) Anmeldetag: 29.11.2018
(51) Int. Cl.: F16F 15/14

(54) **FLIEHKRAFTPENDEL**
CENTRIFUGAL PENDULUM
PENDULE CENTRIFUGE

(30) Priorität: 20.12.2017 DE 102017223450
(43) Veröffentlichungstag der Anmeldung: 28.10.2020
(73) Patentinhaber: Audi AG, 85045 Ingolstadt (DE)
(72) Erfinder: MEYER, Herbert, 93055 Regensburg (DE); FISCHER, Thomas, 85122 Hitzhofen (DE); BRUNS, Andreas, 85055 Ingolstadt (DE); KLUMPP, Peter, 85080 Gaimersheim (DE); PFEIFFER, Jürgen, 85055 Ingolstadt (DE); BUCK, Michael, 85051 Ingolstadt (DE); FORSTER, Thomas, 91171 Greding (DE); PAHLICH, Lutz, 85051 Ingolstadt (DE)
(74) Vertreter: Bierschneider, Walter
(86) Internationale Anmeldenummer: PCT/EP2018/082979
(87) Internationale Veröffentlichungsnummer: WO 2019/120920

(56) Entgegenhaltungen:
- DE-A1-102014 215 868
- DE-A1-102016 222 119
- FR-A1- 3 043 157

## Beschreibung

Die Erfindung betrifft ein Fliehkraftpendel zur Dämpfung von Drehungleichförmigkeiten einer Antriebswelle einer Brennkraftmaschine nach dem Oberbegriff des Patentanspruchs 1, ein Fliehkraftpendel zur Dämpfung von Drehungleichförmigkeiten einer Antriebswelle einer Brennkraftmaschine nach dem Oberbegriff des Patentanspruchs 9 sowie ein Fahrzeug, insbesondere ein Kraftfahrzeug, mit einem der Fliehkraftpendel nach Patentanspruch 10.

Es ist bekannt, an einer Sekundärseite eines Zweimassenschwungrads eines Kraftfahrzeug-Antriebsstrangs ein Fliehkraftpendel vorzusehen, mittels dem Drehungleichförmigkeiten einer Antriebswelle eines Verbrennungsmotors des Antriebsstrangs gedämpft bzw. getilgt werden können. Ein derartiges Fliehkraftpendel weist üblicherweise ein mittelbar über die Primärseite des Zweimassenschwungrads mit der Antriebswelle des Verbrennungsmotors verbindbares Trägerflanschelement und mehrere relativ zu dem Trägerflanschelement verlagerbare, über Laufrollen in Pendelbahnen geführte Pendelelemente bzw. Pendelmassen auf. Dabei kann jedes Pendelelement in Umfangsrichtung des Fliehkraftpendels zwischen einer ersten und einer zweiten Anschlagposition relativ zu dem Trägerflanschelement verlagert bzw. bewegt werden. Mittels eines derartigen Fliehkraftpendels kann einem Auftreten von störenden Brumm- und Dröhngeräuschen im Antriebsstrang effektiv entgegengewirkt werden.

Weiter weisen Zweimassenschwungräder üblicherweise eine Fettfüllung bzw. Fettschmierung auf, mittels der einem Energieverlust durch Reibung zwischen einer Primärseite und einer Sekundärseite des Zweimassenschwungrads entgegengewirkt wird. Mit sinkender Temperatur des Zweimassenschwungrads steigt jedoch die Viskosität einer derartigen Fettfüllung an, was sich negativ auf die Eigenschaft des Zweimassenschwungrads als Entkopplungselement von Drehschwingungen auswirkt. Dabei steigt auf der Sekundärseite des Zweimassenschwungrads der Schwingwinkel und dadurch auch die Bewegung der Pendelelemente des Fliehkraftpendels. Der verfügbare Pendelweg wird dann häufig auch bei normalen Betriebsdrehzahlen bei Steigerung der Motorlast, insbesondere bei einem Anfahren des Kraftfahrzeugs, aufgebraucht. Durch die erhöhte Bewegung der Pendelelemente kommt es dann auch bei den normalen Betriebsdrehzahlen zu einem störenden hörbaren Anschlagen der Pendelelemente an ihren Endanschlägen. Zudem kann dadurch auch die Funktion des Fliehkraftpendels beeinträchtigt werden, weil der Endanschlag der jeweiligen Pendelmasse nicht für alle Energieeinträge dauerfest ausgeführt ist.

Um einer derartigen Erhöhung der Pendelelement-Bewegung bei niedrigen Betriebstemperaturen entgegenzuwirken, könnte beispielsweise die Leerlaufdrehzahl der Brennkraftmaschine erhöht werden. Dies wirkt sich jedoch negativ auf die CO₂-Bilanz und den Kraftstoffverbrauch des Verbrennungsmotors aus.

In der DE 10 2015 206 618 A1 ist ein Fliehkraftpendel zur Dämpfung von über eine Antriebswelle eines Kraftfahrzeugmotors eingeleiteten Drehungleichförmigkeiten offenbart, bei dem ein mit der Antriebswelle mittelbar oder unmittelbar verbindbarer Trägerflansch und mehrere relativ zu dem Trägerflansch verlagerbare bzw. pendelbare Pendelmassen zur Erzeugung eines der Drehungleichförmigkeit entgegengerichteten Rückstellmoments vorgesehen sind. Dabei ist hier ein in tangentialer Richtung an einer ersten Pendelmasse und an einer zweiten Pendelmasse angreifender Anschlagdämpfer vorgesehen, der in einer konkreten Ausgestaltung durch eine schraubenförmige Druckfeder gebildet ist.

Ein Fliehkraftpendel mit einer derartigen Druckfeder als Anschlagdämpfer ist jedoch aufwendig. Zudem wird mittels einer derartigen Druckfeder die Bewegung der Pendelelemente auch in höheren Temperaturbereichen und somit in Temperaturbereichen, in denen eine Dämpfung nicht erforderlich wäre, gedämpft, was sich in den höheren Temperaturbereichen negativ auf die Wirkung bzw. auf die Funktion des Fliehkraftpendels auswirken kann.

Aus der DE 10 2016 222 119 A1 ist ein gattungsgemäßes Fliehkraftpendel mit Zusatzreibung am Bahnende bekannt.

Aufgabe der Erfindung ist es daher, ein Fliehkraftpendel zur Dämpfung bzw. Tilgung von Drehungleichförmigkeiten einer Antriebswelle einer Brennkraftmaschine bereitzustellen, bei dem das Pendelverhalten der Pendelelemente auf einfache und effektive Weise verbessert ist.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Fliehkraftpendel zur Dämpfung von Drehungleichförmigkeiten einer Antriebswelle einer Brennkraftmaschine vorgeschlagen, mit einem mittelbar oder unmittelbar mit der Antriebswelle verbindbaren Trägerflanschelement, und mit mehreren relativ zu dem Trägerflanschelement verlagerbaren, insbesondere über Laufrollen in Pendelbahnen geführten, Pendelelementen, wobei jedes Pendelelement in Umfangsrichtung zwischen einer ersten und einer zweiten Anschlagposition relativ zu dem Trägerflanschelement verlagert werden kann. Erfindungsgemäß ist dem Trägerflanschelement wenigstens ein Reibelement mit definierten, zu dem Trägerflanschelement oder den Pendelelementen unterschiedlichen, Wärmeausdehnungseigenschaften zugeordnet, insbesondere an dem Trägerflanschelement festgelegt, das derart ausgebildet und angeordnet ist, dass in einem definierten Temperaturbereich des Fliehkraftpendels bei einer Bewegung wenigstens eines zu dem Reibelement korrespondierenden Pendelelements in Richtung einer seiner Anschlagpositionen dieses korrespondierende Pendelelement noch vor dem Erreichen der Anschlagposition in Anlage mit dem Reibelement kommt oder ist und unter Abbau von Pendelelement-Bewegungsenergie an dem Reibelement reibt.

Auf diese Weise wird das Pendelverhalten der Pendelelemente einfach und effektiv verbessert, da nun nur in dem relevanten definierten Temperaturbereich die Bewegung des wenigstens einen Pendelelements abgedämpft bzw. Bewegungsenergie dieses Pendelelements abgebaut wird. In anderen, nicht relevanten Temperaturbereichen wird die Bewegung des Pendelelements dann nicht gedämpft, so dass die Wirkung des Fliehkraftpendels hier dann nicht eingeschränkt wird. Durch die Zuordnung des wenigstens einen Reibelements zu dem Trägerflanschelement kann die Bewegung des wenigstens einen korrespondierenden Pendelelements dabei besonders einfach bzw. mit einem besonders einfachen Aufbau sowie auch besonders effektiv temperaturabhängig gedämpft werden.

Bevorzugt wird die Bewegung des wenigstens einen korrespondierenden Pendelelements in dem definierten Temperaturbereich dabei so mittels des Reibelements gedämpft, dass das korrespondierende Pendelelement die Anschlagposition bzw. den Endanschlag nicht mehr erreichen kann.

In einer bevorzugten Ausgestaltung des erfindungsgemäßen Fliehkraftpendels ist das Reibelement derart ausgebildet und angeordnet, dass das wenigstens eine korrespondierende Pendelelement bei einer Bewegung in Richtung der Anschlagposition nur dann in Anlage mit dem Reibelement kommt oder ist, wenn das Fliehkraftpendel einen definierten Temperaturwert unterschreitet. So wird die Bewegung des wenigstens einen korrespondieren Pendelelements nur dann mittels des Reibelements gedämpft, wenn dies, insbesondere aufgrund einer zu hohen Viskosität der Fettfüllung des Zweimassenschwungrads, erforderlich ist. Bevorzugt ist dabei vorgesehen, dass der definierte Temperaturwert in einem Temperaturbereich von 5°C bis 25°C, insbesondere bei etwa 10°C, liegt. Bevorzugt erfolgt eine derartige Dämpfung dabei zumindest bis hin zu einer definierten unteren Betriebstemperatur des Fliehkraftpendels bzw. des das Fliehkraftpendel aufweisenden Zweimassenschwungrads, insbesondere zumindest bis -30°C.

In einer bevorzugten konkreten Ausgestaltung ist das wenigstens eine Reibelement derart ausgebildet und angeordnet, dass in dem definierten Temperaturbereich des Fliehkraftpendels mehrere, insbesondere zwei, zu dem Reibelement korrespondierende, insbesondere in Umfangsrichtung aufeinander folgende, Pendelelemente noch vor dem Erreichen einer jeweiligen Anschlagposition in Anlage mit dem Reibelement sind oder gebracht werden können. So wird die Effektivität des wenigstens einen Reibelements weiter erhöht.

Vorzugsweise ist das Reibelement zumindest bereichsweise in Umfangsrichtung des Fliehkraftpendels zwischen zwei Pendelelementen angeordnet, um eine Dämpfung der Bewegungsenergie dieser beiden Pendelelemente auf einfache und effektive Weise zu realisieren. Für einen kompakten Aufbau ist es zudem bevorzugt, wenn das wenigstens eine Reibelement das Trägerflanschelement in Radialrichtung nicht überragt.

In einer bevorzugten konkreten Ausgestaltung ist das wenigstens eine Reibelement durch einen Bimetallstreifen gebildet. Mittels eines derartigen Bimetallstreifens kann die Bewegung des wenigstens einen korrespondierenden Pendelelements in dem definierten Temperaturbereich einfach und effektiv gedämpft werden. Dabei kann mittels des Bimetallstreifens in dem definierten Temperaturbereich das freie Spiel zwischen den Pendelelementen und dem Trägerflanschelement überbrückt und durch Reibung die freie Bewegung des Pendelelements blockiert bzw. eingeschränkt werden.

Bevorzugt ist der Bimetallstreifen dabei einfach und funktionssicher an einem in Streifen-Längsrichtung zentral angeordneten Befestigungsbereich, insbesondere starr und/oder unbeweglich, an den Trägerflanschelementen festgelegt bzw. befestigt. Bevorzugt ist zudem vorgesehen, dass der Bimetallstreifen an dem zentralen Befestigungsbereich mittels mehrerer in Streifen-Längsrichtung voneinander beabstandeter Befestigungsmittel, insbesondere Schrauben und/oder Nieten, an dem Trägerflanschelement festgelegt ist, um den Bimetallstreifen auf einfache Weise zuverlässig an dem Trägerflanschelement zu befestigen. Alternativ könnte aber auch vorgesehen sein, dass der Bimetallstreifen an dem zentralen Befestigungsbereich mittels mehrerer in Streifen-Querrichtung voneinander beabstandeter Befestigungsmittel an dem Trägerflanschelement festgelegt ist.

In einer bevorzugten konkreten Ausgestaltung ist der Bimetallstreifen an einem in Streifen-Längsrichtung zentralen Bereich, im Querschnitt in Streifen-Längsrichtung gesehen, U-förmig ausgebildet ist, wobei der Bimetallstreifen mit einer U-Basis dieses Bereichs in einer flächigen Anlageverbindung mit dem Trägerflanschelement ist, wobei jeder sich außerhalb des zentralen U-förmigen Bereichs befindliche Außenbereich des Bimetallstreifens, insbesondere mit einem in Streifen-Längsrichtung äußeren Endbereich, in Anlage mit einer dem Trägerflanschelement abgewandten Außenwand eines korrespondierenden Pendelelements ist oder bringbar ist, wenn sich das Fliehkraftpendel in dem definierten Temperaturbereich befindet. So ist der Bimetallstreifen einfach und besonders effektiv ausgebildet.

In einer alternativen Ausgestaltung ist der Bimetallstreifen, sofern sich das Fliehkraftpendel nicht in dem definierten Temperaturbereich befindet, zumindest bis hin zu in Streifen-Längsrichtung äußeren Endbereichen des Bimetallstreifens, im Querschnitt in Streifen-Längsrichtung gesehen, geradlinig verlaufend ausgebildet und/oder in flächiger Anlage mit dem Trägerflanschelement. Auf diese Weise wird ein besonders kompakter Aufbau realisiert, wenn sich das Fliehkraftpendel in dem definierten Temperaturbereich befindet.

Bei dieser Ausgestaltung ist bevorzugt vorgesehen, dass, sofern sich das Fliehkraftpendel in dem definierten Temperaturbereich befindet, sich in Streifen-Längsrichtung außerhalb eines zentralen Befestigungsbereichs des Bimetallstreifens befindliche Außenbereiche des Bimetallstreifens derart aufgebogen und/oder von dem Trägerflanschelement abgehoben sind, dass jeder Außenbereich, insbesondere mit einem in Streifen-Längsordnung äu-βeren Endbereich, in Anlage mit einer dem Trägerflanschelement zugewandten Innenwand eines korrespondierenden Pendelelements ist oder gebracht werden kann. So kann mittels des Bimetallstreifens in dem definierten Temperaturbereich die Bewegung des wenigstens einen korrespondierenden Pendelelements einfach und effektiv abgedämpft werden.

Bevorzugt weist wenigstens ein äußerer Endbereich des Bimetallstreifens einen, im Querschnitt in Streifen-Längsrichtung gesehen, bogenförmigen und/oder C-förmigen und/oder S-förmigen Verlauf auf. So wird einem Verkanten des Bimetallstreifens mit den korrespondierenden Pendelelement effektiv entgegengewirkt. Zudem kann dadurch auch eine definierte Anlage zwischen dem Bimetallstreifen und dem korrespondierenden Pendelelement zuverlässig sichergestellt werden.

Vorzugsweise ist der Bimetallstreifen zumindest bereichsweise in einer, insbesondere nicht durchgängigen, Ausnehmung bzw. Einsenkung des Trägerflanschelements in Trägerflanschelement-Dickenrichtung aufgenommen und/oder angeordnet. Durch diese versenkte Anordnung des Bimetallstreifens wird ein besonders kompakter Aufbau realisiert. Zudem kann dadurch auch eine Abstützwirkung bei Fliehkrafteinfluss durch höhere (nicht schädliche) Drehzahlen erreicht werden. Bevorzugt ist dabei vorgesehen, dass, sofern sich das Fliehkraftpendel nicht im definierten Temperaturbereich befindet, der Bimetallstreifen zumindest bis hin zu in Streifen-Längsrichtung äußeren Endbereichen vollständig in dieser Ausnehmung aufgenommen und/oder angeordnet ist.

Alternativ zu der Ausgestaltung als Bimetallstreifen könnte das wenigstens eine Reibelement auch durch Federstahlblech gebildet sein, das seine Form bzw. Geometrie bei einer definierten Umschalttemperatur nach dem Prinzip eines sogenannten "Knackfroschs" schlagartig bzw. unstetig ändert. Dabei kann das Reibelement dann bei einer geringeren Temperatur als die Umschalttemperatur stets eine erste definierte Form aufweisen, während das Reibelement bei einer höheren Temperatur als die Umschalttemperatur stets eine von der ersten Form unterschiedliche zweite definierte Form aufweist.

Alternativ zu der Ausgestaltung als Bimetallstreifen oder "Knackfrosch" kann das wenigstens eine Reibelement auch durch ein Reibelement mit einem definiert hohen Wärmeausdehnungskoeffizienten gebildet sein.

In einer bevorzugten konkreten Ausgestaltung weist dieses Reibelement dann einen höheren Wärmeausdehnungskoeffizienten als das wenigstens eine korrespondierende Pendelelement und/oder als das Trägerflanschelement auf, um das Reibelement effektiv und funktionssicher zu gestalten. Für einen effektiven oder einfachen Aufbau kann das wenigstens eine Reibelement aus einem Kunststoffmaterial gefertigt sein.

In einer bevorzugten Ausgestaltung ist das Reibelement an einem Befestigungsbereich, insbesondere starr und/oder unbeweglich, an dem Trägerflanschelement festgelegt, wobei das Reibelement wenigstens einen von dem Befestigungsbereich in Umfangsrichtung des Fliehkraftpendels abragenden Arm bzw. Reibarm mit einem Reibwandbereich aufweist, mit dem eine dem Trägerflanschelement abgewandte Außenwand eines korrespondierenden Pendelelements in Anlage ist oder gebracht werden kann, wenn sich das Fliehkraftpendel in dem definierten Temperaturbereich befindet. So kann das wenigstens eine Reibelement einfach und effektiv gestaltet werden.

Vorzugsweise ist der Reibwandbereich dabei an einem, in Umfangsrichtung des Fliehkraftpendels gesehen, äußeren Randbereich des Reibarms angeordnet. Weiter bevorzugt ist der Reibwandbereich durch eine, insbesondere ballige, Ausbuchtung des Reibarms gebildet.

In einer bevorzugten konkreten Ausgestaltung ist das Reibelement im Querschnitt, insbesondere durchgängig, im Wesentlichen L-förmig oder T-förmig ausgebildet.

In einer bevorzugten Ausgestaltung ist weiter vorgesehen, dass, in Dickenrichtung des Trägerflanschelements gesehen, einander gegenüberliegend auf gegenüberliegenden Seiten des Trägerflanschelements jeweils ein Reibelement angeordnet ist. Diese, insbesondere identisch ausgebildeten, Reibelemente sind bevorzugt mittels wenigstens eines Befestigungsmittels, insbesondere mittels wenigstens einer Niet und/oder wenigstens einer Schraube, an dem Trägerflanschelement festgelegt, wobei das wenigstens eine Befestigungsmittel, insbesondere mit einem definierten Spaltabstand, sowohl durch die einander gegenüberliegenden Reibelemente als auch durch das Trägerflanschelement geführt ist. So können die Reibelemente funktionssicher und kostengünstig an dem Trägerflanschelement befestigt werden.

Weiter bevorzugt ist das Reibelement derart ausgebildet, dass sich das Reibelement, sofern sich das Fliehkraftpendel in dem definierten Temperaturbereich befindet, über den gesamten Pendelweg eines korrespondierenden Pendelelements hinweg in Anlage mit diesem Pendelelement ist. So wird effektiv verhindert, dass das Reibelement an dem korrespondierenden Pendelelement einfädeln muss.

Zur Lösung der bereits genannten Aufgabe wird ferner gemäß Anspruch 9 ein Fliehkraftpendel zur Dämpfung von Drehungleichförmigkeiten einer Antriebswelle einer Brennkraftmaschine vorgeschlagen, mit einem mittelbar oder unmittelbar mit der Antriebswelle verbindbaren Trägerflanschelement und mit mehreren relativ zu dem Trägerflanschelement, insbesondere über Laufrollen in Pendelbahnen geführten, Pendelelementen, wobei jedes Pendelelement in Umfangsrichtung zwischen einer ersten und einer zweiten Anschlagposition relativ zu dem Trägerflanschelement verlagert werden kann. Erfindungsgemäß ist wenigstens einem Pendelelement wenigstens ein Reibelement mit definierten, zu dem Trägerflanschelement oder dem Pendelelement unterschiedlichen, Wärmeausdehnungseigenschaften zugeordnet, das derart ausgebildet und angeordnet ist, dass das Pendelelement in einem definierten Temperaturbereich des Fliehkraftpendels bei einer Bewegung in Richtung einer seiner Anschlagpositionen noch vor dem Erreichen dieser Anschlagposition mit dem pendelelementseitigen Reibelement in Anlage mit dem Trägerflanschelement kommt und unter Abbau von Pendelelement-Bewegungsenergie mit dem Reibelement an dem Trägerflanschelement reibt.

Durch die Zuordnung des Reibelements zu dem wenigstens einen Pendelelement kann die Bewegung des wenigstens einen Pendelelements ebenfalls effektiv und einfach temperaturabhängig gedämpft werden.

Bevorzugt ist dabei vorgesehen, dass das Reibelement derart ausgebildet und angeordnet ist, dass das Pendelelement bei einer Bewegung in Richtung der Anschlagposition nur dann mit dem Reibelement in Anlage mit dem Trägerflanschelement kommt, wenn das Fliehkraftpendel einen definierten Temperaturwert unterschreitet. Bevorzugt ist dabei vorgesehen, dass der definierte Temperaturwert in einem Temperaturbereich von 5°C bis 25°C, insbesondere bei etwa 10°C, liegt.

Das Reibelement kann dabei ebenfalls durch einen Bimetallstreifen oder durch ein Reibelement mit einem definiert hohen Wärmeausdehnungskoeffizienten gebildet sein.

Des Weiteren wird auch ein Fahrzeug, insbesondere ein Kraftfahrzeug, mit einem der erfindungsgemäßen Fliehkraftpendel beansprucht. Die sich hieraus ergebenden Vorteile sind identisch mit den bereits gewürdigten Vorteilen der erfindungsgemäßen Fliehkraftpendel, so dass diese an dieser Stelle nicht wiederholt werden. Bevorzugt ist dabei vorgesehen, dass das Fliehkraftpendel mittelbar oder unmittelbar mit einer Antriebswelle einer Brennkraftmaschine als Antriebsmotor des Fahrzeugs verbunden ist.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: in einer Darstellung von oben ein erfindungsgemäßes Fliehkraftpendel;
- Figur 2: in einer vergrößerten Ansicht von oben einen Teil des Fliehkraftpendels;
- Figur 3: eine Schnittdarstellung entlang der Schnittlinie A-A aus Figur 2 mit dem Fliehkraftpendel in einem ersten Temperaturbereich;
- Figur 4: in einer Darstellung gemäß Figur 3 das Fliehkraftpendel in einem zweiten Temperaturbereich;
- Figur 5: in Darstellungen gemäß den Figuren 3 und 4 eine zweite Ausführungsform eines erfindungsgemäßen Fliehkraftpendels;
- Figur 6: in einer Darstellung gemäß Fig. 1 eine dritte Ausführungsform eines erfindungsgemäßen Fliehkraftpendels;
- Figur 7: Schnittdarstellungen entlang der Schnittlinie B-B aus Figur 6;
- Figur 8: in einer Darstellung gemäß Fig. 1 eine vierte Ausführungsform eines erfindungsgemäßen Fliehkraftpendels; und
- Figur 9: Schnittdarstellungen entlang der Schnittlinie C-C aus Figur 8.

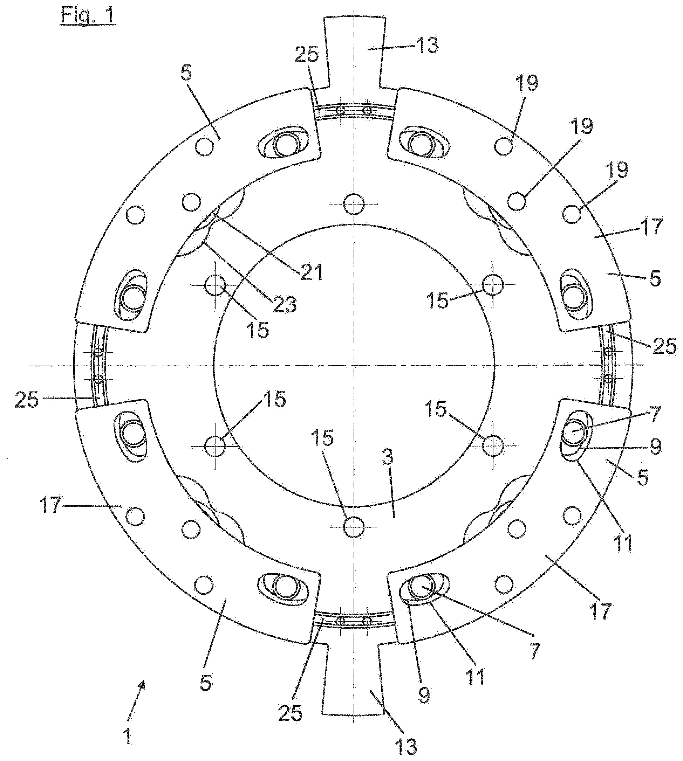

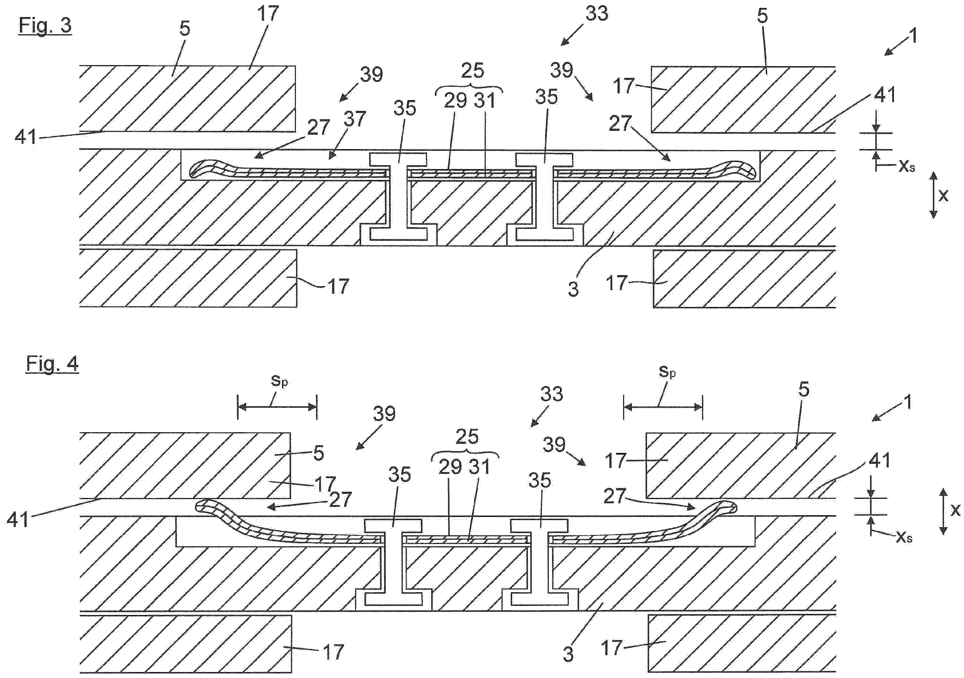

In Figur 1 ist ein erfindungsgemäßes Fliehkraftpendel 1 in einer Darstellung von oben bzw. in Draufsicht gezeigt. Dieses Fliehkraftpendel 1 ist im montierten Zustand Bestandteil einer Sekundärseite eines hier nicht weiter gezeigten Zweimassenschwungrads. Das Fliehkraftpendel 1 weist ein Trägerflanschelement 3 und mehrere, hier beispielhaft vier, relativ zu dem Trägerflanschelement 3 verlagerbare bzw. pendelbare Pendelelemente 5 auf. Jedes Pendelelement 5 ist hier dabei mittels mehrerer, hier beispielhaft zwei, Laufrollen 7 verlagerbar an dem Trägerflanschelement 3 geführt, wobei hier jede Laufrolle 7 in einer Pendelbahn 9 des Trägerflanschelements sowie auch in, in Fliehkraftpendel-Axialrichtung x (Fig. 3) einander gegenüberliegenden Laufbahnen 11 des jeweiligen Pendelelements 5 rollbar geführt ist. Die Pendelbahnen 9, 11 sind hier beispielhaft ellipsenförmig ausgebildet.

Weiter ist das Trägerflanschelement 3 hier im Wesentlichen als Kreisringscheibe ausgebildet und weist hier beispielhaft zwei radial nach außen abragende, einander gegenüberliegende Stege 13 als Mitnehmer für einen Drehschwingungsdämpfer bildende Schraubenfedern des Zweimassenschwungrads auf. Zudem weist das Trägerflanschelement 3 hier radial innen mehrere Bohrungen 15 auf, mittels denen das Fliehkraftpendel 1 mit einer Sekundärschwungmasse des Zweimassenschwungrads verbunden bzw. an die Sekundärschwungmasse angeflanscht werden kann. Die Pendelelemente 5 sind hier zudem radial außen an dem Trägerflanschelement 3 angeordnet. Weiter sind die Pendelelemente 5 hier, in Umfangsrichtung U des Fliehkraftpendels 1 gesehen, gleichmäßig entlang des Trägerflanschelements 3 verteilt sowie auch voneinander beabstandet angeordnet.

Jedes Pendelelement 5 weist hier beispielhaft zwei in Axialrichtung x einander gegenüberliegende ringsegmentförmige Plattenkörper 17 (Figur 3) auf, die hier mittels mehrerer Nietverbindungen 19 starr miteinander verbunden sind. Jeder Plattenkörper 17 bzw. jedes Pendelelement 5 erstreckt sich hier in Umfangsrichtung U über einen Umfangswinkel von etwa 80°. Gemäß Figur 1 weist hier zudem jedes Pendelelement 5 ein in Axialrichtung x zwischen den jeweiligen Plattenkörper 17 angeordnetes Anschlagelement 21 auf, das in einer korrespondierenden Anschlagbahn 23 des Trägerflanschelements 3 geführt ist, so dass jedes Pendelelement 5 in Umfangsrichtung U zwischen einer ersten und einer zweiten Anschlagposition relativ zu dem Trägerflanschelement 3 verlagert werden kann.

Wie aus Figur 1 weiter hervorgeht, erstreckt sich hier weiter, in Umfangsrichtung U gesehen, zwischen den Pendelelementen 5 jeweils ein hier als Bimetallstreifen ausgebildetes Reibelement 25, das dem Trägerflanschelement 3 zugeordnet ist bzw. an dem Trägerflanschelement 3 festgelegt ist. Dabei sind die Bimetallstreifen 25 hier, in Axialrichtung x bzw. in Trägerflanschelement-Dickenrichtung gesehen, nur an einer Seite des Trägerelements 3 angeordnet, so dass das Fliehkraftpendel 1 hier insgesamt vier Bimetallstreifen 25 umfasst.

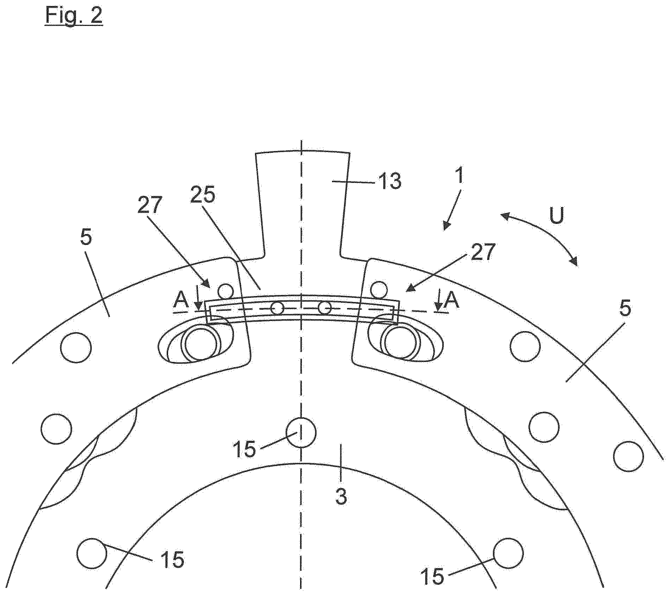

Gemäß Figur 2 ragt hier jeder Bimetallstreifen 25 mit seinen Endbereichen 27 unter die beiden zugeordneten bzw. korrespondierenden Pendelelemente 5 ein. Zudem sind die langen Außenseiten des Bimetallstreifens 25 hier identisch wie das Trägerflanschelement 3 gekrümmt. Weiter überragt der Bimetallstreifen 25 hier das Trägerflanschelement 3 auch nicht in Radialrichtung.

Wie weiter in den Figuren 3 und 4 gezeigt ist, weist der Bimetallstreifen 25 zwei Schichten 29, 31 aus unterschiedlichen Metallen auf, die unterschiedliche Wärmeausdehnungskoeffizienten aufweisen und beispielsweise stoffschlüssig oder formschlüssig miteinander verbunden sein können. Zudem ist der hier flache und längliche Bimetallstreifen 25 hier beispielhaft an einem in Streifen-Längsrichtung zentralen Befestigungsbereich 33 starr bzw. unbeweglich an dem Trägerflanschelement 3 festgelegt. Diese Festlegung bzw. Befestigung wird hier beispielhaft mittels mehrerer in Streifen-Längsrichtung voneinander beabstandeter Befestigungsmittel 35, beispielsweise Schrauben oder Nieten, realisiert.

In Figur 3 ist der Bimetallstreifen 25 hier zudem in einem Grundzustand bzw. in einer Grundform gezeigt, in der sich der Bimetallstreifen 25 hier beispielhaft befindet, wenn der Bimetallstreifen 25 einen definierten Temperaturwert, insbesondere etwa 10°C, überschreitet. In Figur 4 ist der Bimetallstreifen 25 in einem Reibzustand bzw. in einer Reibform gezeigt, in dem sich der Bimetallstreifen 25 hier beispielhaft befindet, wenn der Bimetallstreifen 25 den definierten Temperaturwert unterschreitet.

In dem in Figur 3 gezeigten Grundzustand ist der Bimetallstreifen 25 hier bis hin zu den in Streifen-Längsrichtung äußeren Endbereichen 27, im in Fig. 3 gezeigten Querschnitt in Streifen-Längsrichtung gesehen, geradlinig verlaufend ausgebildet sowie auch in flächiger Anlage mit dem Trägerflanschelement 3. Zudem weist in dem Grundzustand des Bimetallstreifens 25 jeder äußere Endbereich 27 des Bimetallstreifens 25 einen, im Querschnitt in Streifen-Längsrichtung gesehen, im Wesentlichen C-förmigen Verlauf auf. Des Weiteren ist der Bimetallstreifen 25 hier in dem Grundzustand vollständig in einer nicht durchgängigen Ausnehmung bzw. Einsenkung des Trägerflanschelements 3 in Trägerflanschelement-Dickenrichtung aufgenommen bzw. angeordnet.

In dem in Figur 4 gezeigten Reibzustand sind die sich außerhalb des zentralen Befestigungsbereichs 33 des Bimetallstreifens 25 befindlichen Außenbereiche 39 des Bimetallstreifens 25 derart aufgebogen bzw. gekrümmt und von dem Trägerflanschelement 3 abgehoben, dass diese Außenbereiche 39 mit den Endbereichen 27 in Anlage mit dem Trägerflanschelement 3 zugewandten Innenwänden 41 der korrespondierenden Pendelelemente 5 sind. Somit wird in dem Reibzustand ein freies Spiel xs zwischen dem jeweiligen Pendelelement 5 und dem Trägerflanschelement 3 mittels des Bimetallstreifens 25 überbrückt. Zudem ist der sich in dem Reibzustand befindliche Bimetallstreifen 25 hier über den gesamten Pendelweg s_{P} der korrespondierenden Pendelelemente 5 mit seinen Endbereichen 27 in Anlage mit den korrespondierenden Pendelelementen 5.

Jeder Bimetallstreifen 25 ist hier somit derart ausgebildet und angeordnet, dass in dem in Figur 4 gezeigten Reibzustand bzw. bei einer niedrigen Temperatur des Fliehkraftpendels 1 bei einer Bewegung der zu dem Bimetallstreifen 25 korrespondierenden Pendelelemente 5 in Richtung einer ihrer Anschlagpositionen bzw. in Richtung zu dem Bimetallstreifen 25 diese korrespondierenden Pendelelemente 5 vor dem Erreichen dieser Anschlagposition in Anlage mit dem Bimetallstreifen 25 sind und unter Abbau von Pendelelement-Bewegungsenergie an dem Bimetallstreifen 25 reiben. So wird die Bewegung der Pendelelemente 5 in diesem Temperaturbereich effektiv gedämpft und das Pendelverhalten des Fliehkraftpendels 1 verbessert.

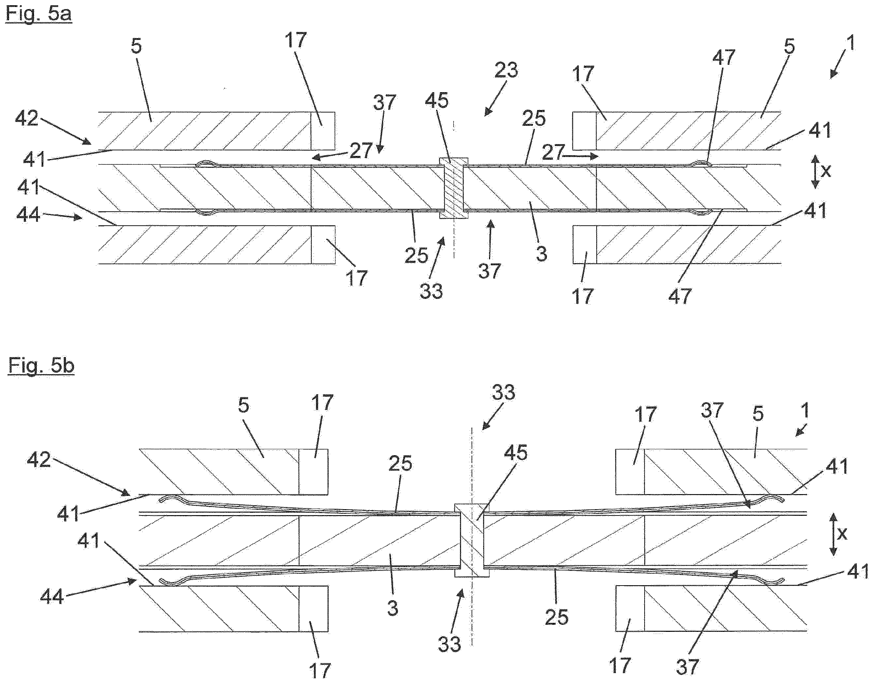

In den Figuren 5a und 5b ist ein zweites Ausführungsbeispiel eines erfindungsgemäßen Fliehkraftpendels 1 gezeigt. Im Vergleich zu dem in den Figuren 1 bis 4 gezeigten ersten Ausführungsbeispiel ist hier an dem in den Fig. 5a und 5b gezeigten Bereich des Fliehkraftpendels 1, in Dickenrichtung des Trägerflanschelements 3 gesehen, einander gegenüberliegend auf gegenüberliegenden Seiten 42, 44 des Trägerflanschelements 3 jeweils ein Bimetallstreifen 25 angeordnet. Somit weist das Fliehkraftpendel 1 hier insgesamt acht Bimetallstreifen 25 auf.

Die einander gegenüberliegenden Bimetallstreifen 25 sind hier identisch ausgebildet und mittels eines einzigen Befestigungsmittels 45, beispielsweise einer Niete und/oder einer Schraube, an dem Trägerflanschelement 3 festgelegt, wobei das Befestigungsmittel 45 mit einem definierten Spaltabstand sowohl durch die einander gegenüberliegenden Bimetallstreifen 25 als auch durch das Trägerflanschelement 3 geführt ist. Dabei bilden die jeweilige Ausnehmung 37 begrenzende Seitenwände 47 des Trägerflanschelements 3 hier eine Führung für den jeweiligen Bimetallstreifen 25 aus, so dass sich der jeweilige Bimetallstreifen 25 nicht verdrehen kann. Zudem sind die Ausnehmungen bzw. Einsenkungen 37 des Trägerflanschelements 3 hier beispielhaft mit einer geringeren Tiefe ausgebildet, so dass der Bimetallstreifen 25 in dem in Fig. 5a gezeigten Verstauzustand nur bis hin zu seinen äußeren Endbereichen 27 vollständig in der Ausnehmung 37 angeordnet ist.

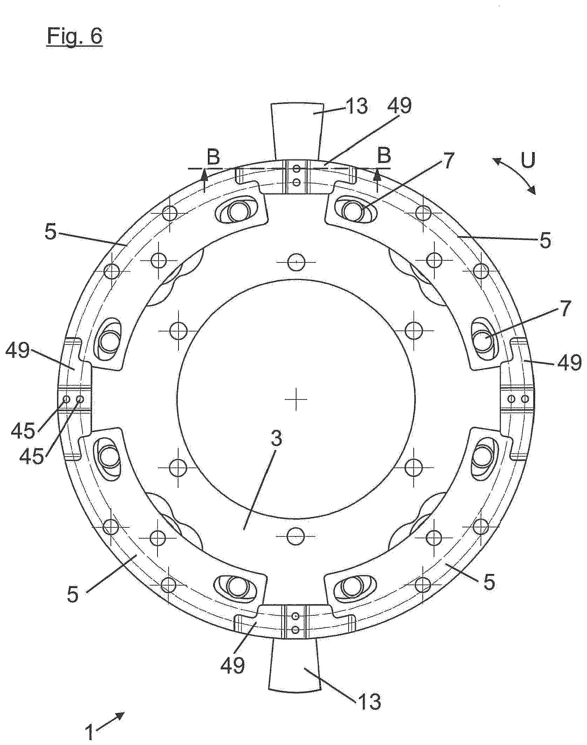

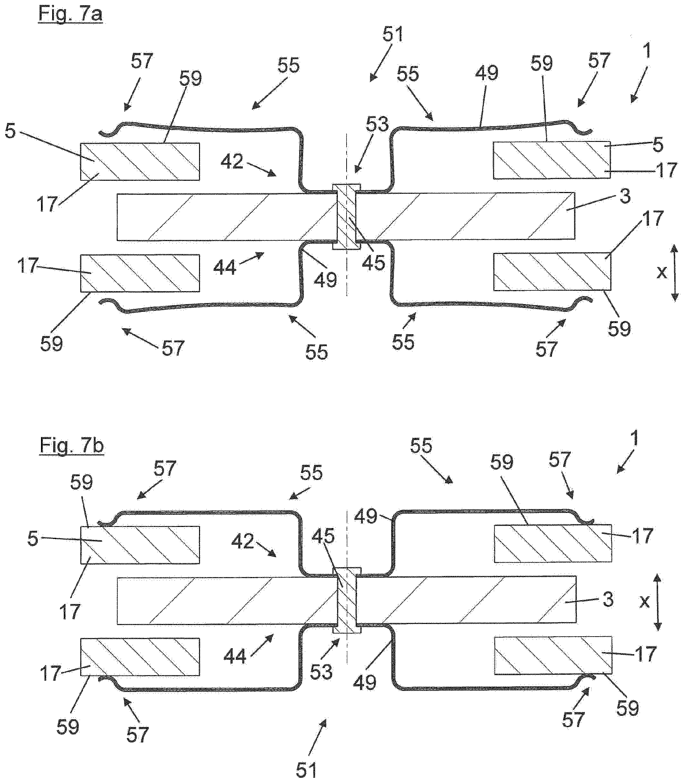

In den Figuren 6, 7a und 7b ist ein drittes Ausführungsbeispiel eines erfindungsgemäßen Fliehkraftpendels 1 gezeigt. Im Vergleich zu den in den Figuren 1 bis 5 gezeigten Ausführungsbeispielen sind hier anstelle der Bimetallstreifen 25 Bimetallstreifen 49 vorgesehen, die hier gemäß Fig. 6 breiter als die Bimetallstreifen 25 ausgebildet sind. Jeder Bimetallstriefen erstreckt sich hier ausgehend von einem radial äußeren Rand des Trägerflanschelements 3 radial nach innen. Zudem verjüngt sich hier jeder Bimetallstreifen 49, in Radialrichtung des Fliehkraftpendels 1 gesehen, stufenförmig nach innen, so dass die Laufrollen 7 des Fliehkraftpendels 1 hier nicht an die Bimetallstreifen 49 stoßen können.

Gemäß den Fig. 7a und 7b ist hier jeder Bimetallstreifen 49 an einem in Streifen-Längsrichtung zentralen Bereich 51, im Querschnitt in Streifen-Längsrichtung gesehen, U-förmig ausgebildet ist. Jeder Bimetallstreifen 49 ist hier dabei mit einer U-Basis 53 dieses Bereichs 51 in einer flächigen Anlageverbindung mit dem Trägerflanschelement 3. Dabei ist hier, so wie auch bei dem Ausführungsbeispiel gemäß Fig. 5, in Dickenrichtung des Trägerflanschelements 3 gesehen, einander gegenüberliegend auf den gegenüberliegenden Seiten 42, 44 des Trägerflanschelements 3 jeweils ein Bimetallstreifen 49 angeordnet. Die einander gegenüberliegenden identischen Bimetallstreifen 49 sind hier mittels zweier Befestigungsmittel 45 (Fig. 6) an dem Trägerflanschelement 3 festgelegt, wobei die Befestigungsmittel 45 mit einem definierten Spaltabstand sowohl durch die einander gegenüberliegenden Bimetallstreifen 49 als auch durch das Trägerflanschelement 3 geführt sind. Dabei sind die Befestigungsmittel 45 hier in Streifen-Querrichtung voneinander beabstandet angeordnet.

Weiter weist jeder Bimetallstreifen 49 sich an den zentralen U-förmigen Bereich 51 nach außen anschließende Außenbereiche 55 auf, die hier beispielhaft in dem in Fig. 7b gezeigten Reibzustand, im Querschnitt in Streifen-Längsrichtung gesehen, bis hin zu äußeren Endbereichen 57 des Bimetallstreifens 49 geradlinig verlaufend ausgebildet sind und mit einem definierten Axialabstand von den korrespondierenden Pendelelementen 5 beabstandet axial außerhalb der Pendelelements 5 verlaufen. Zudem weist hier in dem Reibzustand des Bimetallstreifens 49 jeder äußere Endbereich 57 einen, im Querschnitt in Streifen-Längsrichtung gesehen, S-förmigen Verlauf auf. Mit diesen S-förmigen Endbereichen 57 ist der jeweilige Bimetallstreifen 49 stets in Anlage mit dem Trägerflanschelement 3 abgewandten Außenwänden 59 der korrespondierenden Pendelelemente 5, wenn sich das Fliehkraftpendel 1 in dem in Fig. 7b gezeigten Reibzustand befindet. Somit umgreift der jeweilige Bimetallstreifen 49 bei diesem Ausführungsbeispiel die korrespondierenden Pendelelemente 5 von außen.

In dem in Figur 7a gezeigten Grundzustand sind die sich außerhalb des zentralen Bereichs 51 des jeweiligen Bimetallstreifens 49 befindlichen Außenbereiche 55 des Bimetallstreifens 49 derart aufgebogen bzw. gekrümmt und von den korrespondierenden Pendelelementen 5 abgehoben, dass die Au-ßenbereiche 55 mit ihren Endbereichen 57 nicht mehr in Anlage mit den korrespondierenden Pendelelementen 5 sind.

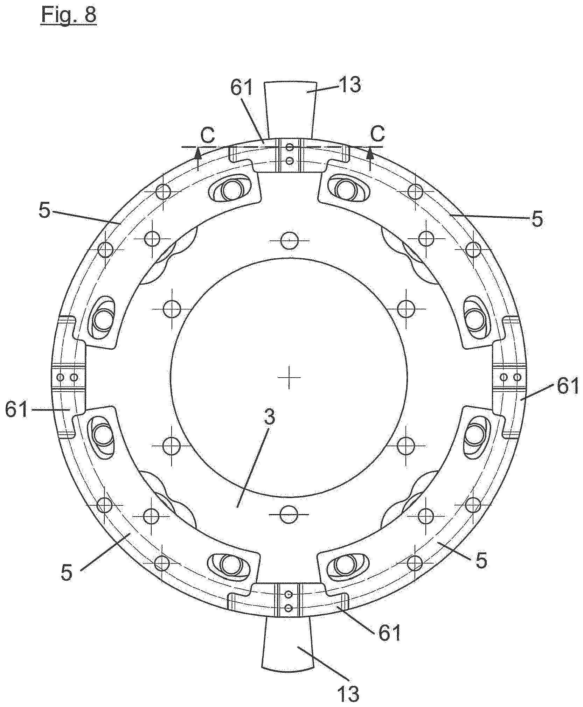

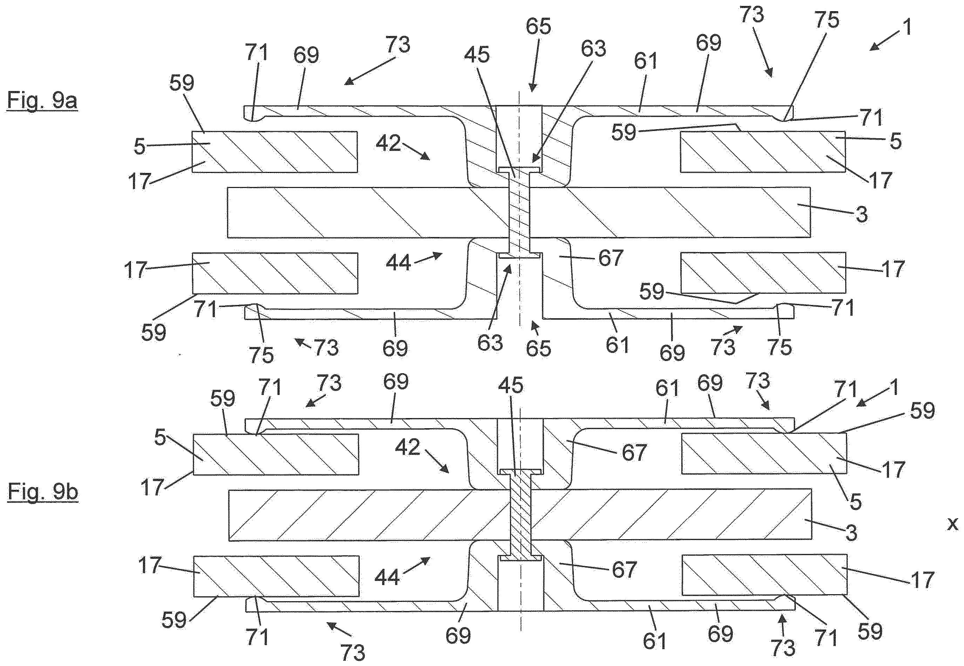

In den Figuren 8, 9a und 9b ist ein viertes Ausführungsbeispiel eines erfindungsgemäßen Fliehkraftpendels 1 gezeigt. Im Vergleich zu dem in den Figuren 1 bis 7 gezeigten Ausführungsbeispielen weist das Fliehkraftpendel 1 hier keine Bimetallstreifen 25 als Reibelemente auf. Anstelle dessen weist das Fliehkraftpendel 1 hier mehrere Reibelemente 61 mit einem definiert hohen Wärmeausdehnungskoeffizienten auf. Diese Reibelemente 61 weisen hier einen deutlich höheren Wärmeausdehnungskoeffizienten als die Pendelelemente 5 und das Trägerflanschelement 3 auf und sind hier beispielhaft aus einem Kunststoffmaterial gefertigt.

Wie aus den Figuren 9a und 9b hervorgeht, ist hier wiederum, in Dickenrichtung des Trägerflanschelements 3 gesehen, einander gegenüberliegend auf gegenüberliegenden Seiten 42, 44 des Trägerflanschelements 3 jeweils ein Reibelement 61 angeordnet. Diese gegenüberliegenden Reibelemente 61 sind hier identisch ausgebildet und auf identische Weise wie die Bimtallstreifen 49 mittels zwei Befestigungselementen 45 an dem Trägerflanschelement 3 festgelegt. Zudem sind die Endbereiche 63 der Befestigungsmittel 62 hier versenkt in einer Ausnehmung 65 des jeweiligen Reibelements 61 angeordnet.

Des Weiteren ist jedes Reibelement 61 hier im Querschnitt im Wesentlichen T-förmig ausgebildet. Dabei ist hier jedes Reibelement 61 an einer, einen Befestigungsbereich bildenden T-Basis 67 mittels der Befestigungsmittel 62 starr bzw. unbeweglich an dem Trägerflanschelement 3 festgelegt. Die T-Basis 67 ist dabei mit ihrem freien Ende in flächiger Anlage mit dem Trägerflanschelement 3. Zudem weist hier jedes Reibelement 61 zwei von dem Befestigungsbereich 67 in gegenüberliegenden Richtungen in Umfangsrichtung U des Fliehkraftpendels 1 abragende Arme bzw. Reibarme 69 auf. Jeder Arm 69 weist hier einen Reibwandbereich 71 auf. Jeder dieser Reibwandbereiche 71 ist hier dabei an einem, in Umfangsrichtung des Fliehkraftpendels 1 gesehen, äußeren Randbereich 73 des jeweiligen Reibarms 69 angeordnet und durch eine ballige Ausbuchtung bzw. Wölbung 75 des jeweiligen Reibarms 69 gebildet.

In dem in Fig. 9a gezeigten Grundzustand der Reibelemente 61 sind die Reibelemente 61 mit ihren Reibwandbereichen 71 hier dann stets in Anlage mit den Außenwänden 59 der korrespondierenden Pendelelemente 5. In dem in Fig. 9b gezeigten Reibzustand sind die Reibelemente 61 mit ihren Reibwandbereichen 71 stets außer Anlage mit den Außenwänden 59 der korrespondierenden Pendelelemente 5 bzw. von den Außenwänden 59 beabstandet. Somit umgreift das jeweilige Reibelement 61 die korrespondierenden Pendelelemente 5 hier ebenfalls von außen.

## Patentansprüche

1. Fliehkraftpendel zur Dämpfung von Drehungleichförmigkeiten einer Antriebswelle einer Brennkraftmaschine, mit einem mittelbar oder unmittelbar mit der Antriebswelle verbindbaren Trägerflanschelement (3), und mit mehreren relativ zu dem Trägerflanschelement (3) verlagerbaren Pendelelementen (5), wobei jedes Pendelelement (5) in Umfangsrichtung (4) zwischen einer ersten und einer zweiten Anschlagposition relativ zu dem Trägerflanschelement (3) verlagerbar ist, **dadurch gekennzeichnet, dass** dem Trägerflanschelement (3) wenigstens ein Reibelement (25; 49; 61) mit definierten, zu dem Trägerflanschelement (3) oder den Pendelelementen (5) unterschiedlichen, Wärmeausdehnungseigenschaften zugeordnet ist, das derart ausgebildet und angeordnet ist, dass in einem definierten Temperaturbereich des Fliehkraftpendels (1) bei einer Bewegung wenigstens eines zu dem Reibelement (25; 49; 61) korrespondierenden Pendelelements (5) in Richtung einer Anschlagposition dieses korrespondierende Pendelelement (5) noch vor dem Erreichen der Anschlagposition in Anlage mit dem Reibelement (25; 49; 61) kommt oder ist und unter Abbau von Pendelelement-Bewegungsenergie an dem Reibelement (25; 49; 61) reibt.

2. Fliehkraftpendel nach Anspruch 1, **dadurch gekennzeichnet, dass** das Reibelement (25; 49; 61) derart ausgebildet und angeordnet ist, dass das wenigstens eine korrespondierende Pendelelement (5) bei einer Bewegung in Richtung der Anschlagposition nur dann in Anlage mit dem Reibelement (25; 49; 61) kommt oder ist, wenn das Fliehkraftpendel (1) einen definierten Temperaturwert unterschreitet, wobei vorgesehen ist, dass der definierte Temperaturwert in einem Temperaturbereich von 5°C bis 25°C liegt.

3. Fliehkraftpendel nach Anspruch 1 oder 2, **dadurch gekennzeichnet, dass** das Reibelement durch einen Bimetallstreifen (25; 49) gebildet ist.

4. Fliehkraftpendel nach Anspruch 3, **dadurch gekennzeichnet, dass** der Bimetallstreifen (49) an einem in Streifen-Längsrichtung zentralen Bereich (51), im Querschnitt in Streifen-Längsrichtung gesehen, U-förmig ausgebildet ist, wobei der Bimetallstreifen (49) mit einer U-Basis (53) dieses Bereichs in einer flächigen Anlageverbindung mit dem Trägerflanschelement (3) ist, wobei jeder sich außerhalb des zentralen U-förmigen Bereichs (51) befindliche Außenbereich (55) des Bimetallstreifens (49) mit einem in Streifen-Längsrichtung äußeren Endbereich (57), in Anlage mit einer dem Trägerflanschelement (3) abgewandten Außenwand (59) eines korrespondierenden Pendelelements (5) ist oder bringbar ist, wenn sich das Fliehkraftpendel (1) in dem definierten Temperaturbereich befindet.

5. Fliehkraftpendel nach Anspruch 3, **dadurch gekennzeichnet, dass**, sofern sich das Fliehkraftpendel (1) nicht in dem definierten Temperaturbereich befindet, der Bimetallstreifen (25) zumindest bis hin zu in Streifen-Längsrichtung äußeren Endbereichen (27), im Querschnitt in Streifen-Längsrichtung gesehen, geradlinig verläuft und/oder in flächiger Anlage mit dem Trägerflanschelement (3) ist.

6. Fliehkraftpendel nach einem Anspruch 5, **dadurch gekennzeichnet, dass** der Bimetallstreifen (25) zumindest bereichsweise in einer nicht durchgängigen Ausnehmung (37) des Trägerflanschelements (3) in Trägerflanschelement-Dickenrichtung aufgenommen und/oder angeordnet ist, wobei vorgesehen ist, dass, sofern sich das Fliehkraftpendel (1) nicht in dem definierten Temperaturbereich befindet, der Bimetallstreifen (25) zumindest bis hin zu in Streifen-Längsrichtung äußeren Endbereichen (27) vollständig in dieser Ausnehmung (37) aufgenommen und/oder angeordnet ist.

7. Fliehkraftpendel nach Anspruch 1 oder 2, **dadurch gekennzeichnet, dass** das Reibelement (61) mit einem definiert hohen Wärmeausdehungskoeffizienten ausgebildet ist, wobei vorgesehen ist, dass das Reibelement (61) einen höheren Wärmeausdehungskoeffizienten als das wenigstens eine korrespondierende Pendelelement (5) und/oder als das Trägerflanschelement (3) aufweist.

8. Fliehkraftpendel nach Anspruch 7, **dadurch gekennzeichnet, dass** das Reibelement (61) an einem Befestigungsbereich (67) starr und/oder unbeweglich an dem Trägerflanschelement (3) festgelegt ist, wobei das Reibelement (61) wenigstens einen von dem Befestigungsbereich (67) in Umfangsrichtung (U) abragenden Arm (69) mit einem Reibwandbereich (71) aufweist, mit dem eine dem Trägerflanschelement (3) abgewandte Außenwand (59) eines korrespondierenden Pendelelements (1) in Anlage ist oder bringbar ist, wenn sich das Fliehkraftpendel (1) in dem definierten Temperaturbereich befindet, wobei vorgesehen ist, dass das Reibelement (61) im Querschnitt im Wesentlichen L-förmig oder T-förmig ausgebildet ist.

9. Fliehkraftpendel zur Dämpfung von Drehungleichförmigkeiten einer Antriebswelle einer Brennkraftmaschine, mit einem mittelbar oder unmittelbar mit der Antriebswelle verbindbaren Trägerflanschelement (3), und mit mehreren relativ zu dem Trägerflanschelement (3) verlagerbaren Pendelelementen (5), wobei jedes Pendelelement (5) in Umfangsrichtung zwischen einer ersten und einer zweiten Anschlagposition relativ zu dem Trägerflanschelement verlagerbar ist, **dadurch gekennzeichnet, dass** wenigstens einem Pendelelement (5) wenigstens ein Reibelement mit definierten, zu dem Trägerflanschelement (3) oder dem Pendelelement (5) unterschiedlichen, Wärmeausdehnungseigenschaften zugeordnet ist, das derart ausgebildet und angeordnet ist, dass das Pendelelement (5) in einem definierten Temperaturbereich des Fliehkraftpendels (1) bei einer Bewegung in Richtung einer Anschlagposition noch vor dem Erreichen der Anschlagposition mit dem pendelelementseitigen Reibelement in Anlage mit dem Trägerflanschelement (3) kommt und unter Abbau von Pendelelement-Bewegungsenergie mit dem Reibelement an dem Trägerflanschelement reibt.

10. Fahrzeug mit einem Fliehkraftpendel nach einem der vorhergehenden Ansprüche, wobei vorgesehen ist, dass das Fliehkraftpendel (1) mittelbar oder unmittelbar mit einer Antriebswelle einer Brennkraftmaschine als Antriebsmotor des Fahrzeugs verbunden ist.

## Claims

1. Centrifugal force pendulum for damping rotational non-uniformities of a drive shaft of an internal combustion engine, with a carrier flange element (3) which can be connected indirectly or directly to the drive shaft, and with a plurality of pendulum elements (5) which can be moved relative to the carrier flange element (3), it being possible for each pendulum element (5) to be moved relative to the carrier flange element (3) in the circumferential direction (4) between a first and a second stop position, **characterized in that** the carrier flange element (3) is assigned at least one friction element (25; 49; 61) with defined thermal expansion properties which are different from the carrier flange element (3) or the pendulum elements (5), which at least one friction element (25; 49; 61) is configured and arranged in such a way that, in a defined temperature range of the centrifugal force pendulum (1) in the case of a movement of at least one pendulum element (5), corresponding to the friction element (25; 49; 61), in the direction of a stop position, this corresponding pendulum element (5) is in contact or comes into contact with the friction element (25; 49; 61) even before the stop position is reached, and rubs against the friction element (25; 49; 61) with dissipation of pendulum element kinetic energy.

2. Centrifugal force pendulum according to Claim 1, **characterized in that** the friction element (25; 49; 61) is arranged and configured in such a way that the at least one corresponding pendulum element (5) comes into contact or is in contact with the friction element (25; 49; 61) in the case of a movement in the direction of the stop position only when the centrifugal force pendulum (1) undershoots a defined temperature value, it being provided that the defined temperature value lies in a temperature range from 5°C to 25°C.

3. Centrifugal force pendulum according to Claim 1 or 2, **characterized in that** the friction element is formed by way of a bimetallic strip (25; 49).

4. Centrifugal force pendulum according to Claim 3, **characterized in that** the bimetallic strip (49) is of U-shaped configuration in a central region (51) in the strip longitudinal direction, as viewed in cross section in the strip longitudinal direction, the bimetallic strip (49) having a flat contact connection with the carrier flange element (3) by way of a U-base (53) of this region, each outer region (55), situated outside the U-shaped region (51), of the bimetallic strip (49) being in contact or being capable of being brought into contact by way of an outer end-region (57) in the strip longitudinal direction with an outer wall (59), facing away from the carrier flange element (3), of a corresponding pendulum element (5) when the centrifugal force pendulum (1) is in the defined temperature range.

5. Centrifugal force pendulum according to Claim 3, **characterized in that**, if the centrifugal force pendulum (1) is not in the defined temperature range, the bimetallic strip (25) runs rectilinearly at least as far as outer end regions (27) in the strip longitudinal direction, as viewed in cross section in the strip longitudinal direction, and/or is in flat contact with the carrier flange element (3).

6. Centrifugal force pendulum according to Claim 5, **characterized in that** the bimetallic strip (25) is received and/or arranged at least in regions in a noncontinuous recess (37) of the carrier flange element (3) in the carrier flange element thickness direction, it being provided that, if the centrifugal force pendulum (1) is not in the defined temperature range, the bimetallic strip (25) is received and/or arranged completely in this recess (37) at least as far as outer end regions (27) in the strip longitudinal direction.

7. Centrifugal force pendulum according to Claim 1 or 2, **characterized in that** the friction element (61) is configured with a coefficient of thermal expansion of defined magnitude, it being provided that the friction element (61) has a higher coefficient of thermal expansion than the at least one corresponding pendulum element (5) and/or than the carrier flange element (3).

8. Centrifugal force pendulum according to Claim 7, **characterized in that** the friction element (61) is fixed at a fastening region (67) rigidly and/or immovably on the carrier flange element (3), the friction element (61) having at least one arm (69) which protrudes from the fastening region (67) in the circumferential direction (U), has a friction wall region (71), and with which an outer wall (59), facing away from the carrier flange element (3), of a corresponding pendulum element (1) is in contact or can be brought into contact when the centrifugal force pendulum (1) is in the defined temperature range, it being provided that the friction element (61) is of substantially L-shaped or T-shaped configuration in cross section.

9. Centrifugal force pendulum for damping rotational non-uniformities of a drive shaft of an internal combustion engine, with a carrier flange element (3) which can be connected indirectly or directly to the drive shaft, and with a plurality of pendulum elements (5) which can be moved relative to the carrier flange element (3), it being possible for each pendulum element (5) to be moved relative to the carrier flange element in the circumferential direction between a first and a second stop position, **characterized in that** at least one pendulum element (5) is assigned at least one friction element with defined thermal expansion properties which are different from the carrier flange element (3) or the pendulum element (5), which at least one friction element is configured and arranged in such a way that, in a defined temperature range of the centrifugal force pendulum (1) in the case of a movement in the direction of a stop position, the pendulum element (5) comes into contact with the carrier flange element (3) even before the stop position with the pendulum-side friction element is reached, and rubs against the carrier flange element by way of the friction element with dissipation of pendulum element kinetic energy.

10. Vehicle with a centrifugal force pendulum according to one of the preceding claims, it being provided that the centrifugal force pendulum (1) is connected indirectly or directly to a drive shaft of an internal combustion engine as drive motor of the vehicle.

## Revendications

1. Pendule centrifuge servant à l'amortissement d'irrégularités de rotation d'un arbre d'entraînement d'un moteur à combustion interne, comprenant un élément de bride de support (3) pouvant être relié directement ou indirectement à l'arbre d'entraînement, et comprenant plusieurs éléments pendulaires (5) déplaçables par rapport à l'élément de bride de support (3), chaque élément pendulaire (5) étant déplaçable dans la direction circonférentielle (4) entre une première et une deuxième position de butée par rapport à l'élément de bride de support (3), **caractérisé en ce qu'**au moins un élément de friction (25 ; 49 ; 61) qui présente des caractéristiques de dilatation thermique définies, différentes de celles de l'élément de bride de support (3) ou des éléments pendulaires (5) est associé à l'élément de bride de support (3), lequel élément de friction est réalisé et disposé de telle sorte que, dans une plage de température définie du pendule centrifuge (1), lors d'un mouvement d'au moins un élément pendulaire (5) correspondant à l'élément de friction (25 ; 49 ; 61) en direction d'une position de butée, cet élément pendulaire (5) correspondant est ou vient en appui avec l'élément de friction (25 ; 49 ; 61) avant même d'avoir atteint la position de butée et frotte sur l'élément de friction (25 ; 49 ; 61) de telle sorte que l'énergie cinétique de l'élément pendulaire diminue.

2. Pendule centrifuge selon la revendication 1, **caractérisé en ce que** l'élément de friction (25 ; 49 ; 61) est réalisé et disposé de telle sorte que l'au moins un élément pendulaire (5) correspondant, lors d'un mouvement en direction de la position de butée, n'est ou ne vient en appui avec l'élément de friction (25 ; 49 ; 61) que lorsque le pendule centrifuge (1) passe en dessous d'une valeur de température définie, la valeur de température définie se situant dans une plage de température de 5°C à 25°C.

3. Pendule centrifuge selon la revendication 1 ou 2, **caractérisé en ce que** l'élément de friction est formé par une lame bimétallique (25 ; 49).

4. Pendule centrifuge selon la revendication 3, **caractérisé en ce que** la lame bimétallique (49) est réalisée en forme de U, vue en section transversale dans la direction longitudinale de lame, au niveau d'une région (51) centrale dans la direction longitudinale de lame, la lame bimétallique (49) étant en liaison d'appui plane avec l'élément de bride de support (3) par une base de U (53) de cette région, chaque région extérieure (55), se trouvant à l'extérieur de la région (51) centrale en forme de U, de la lame bimétallique (49) étant ou pouvant être amenée en appui, par une région d'extrémité (57) extérieure dans la direction longitudinale de lame, avec une paroi extérieure (59), opposée à l'élément de bride de butée (3), d'un élément pendulaire (5) correspondant, lorsque le pendule centrifuge (1) se trouve dans la plage de température définie.

5. Pendule centrifuge selon la revendication 3, **caractérisé en ce que**, pour autant que le pendule centrifuge (1) ne se trouve pas dans la plage de température définie, la lame bimétallique (25) s'étend de manière rectiligne, vue en section transversale dans la direction longitudinale de lame, au moins jusque dans des régions d'extrémité (27) extérieures dans la direction longitudinale de lame, et/ou est en appui plan avec l'élément de bride de support (3).

6. Pendule centrifuge selon la revendication 5, **caractérisé en ce que** la lame bimétallique (25) est reçue et/ou disposée au moins dans certaines régions dans un évidement (37) non traversant de l'élément de bride de support (3) dans la direction de l'épaisseur de l'élément de bride de support, la lame bimétallique (25) étant reçue et/ou disposée complètement dans cet évidement (37) au moins jusque dans des régions d'extrémité (27) extérieures dans la direction longitudinale de lame, pour autant que le pendule centrifuge (1) ne se trouve pas dans la plage de température définie.

7. Pendule centrifuge selon la revendication 1 ou 2, **caractérisé en ce que** l'élément de friction (61) est réalisé avec un coefficient de dilatation thermique élevé défini, l'élément de friction (61) présentant un coefficient de dilatation thermique plus élevé que l'au moins un élément pendulaire (5) correspondant et/ou que l'élément de bride de support (3).

8. Pendule centrifuge selon la revendication 7, **caractérisé en ce que** l'élément de friction (61) est fixé à l'élément de bride de support (3) de manière rigide et/ou immobile au niveau d'une région de fixation (67), l'élément de friction (61) présentant au moins un bras (69), faisant saillie à partir de la région de fixation (67) dans la direction circonférentielle (U) et présentant une région de paroi de friction (71) avec laquelle une paroi extérieure (59), opposée à l'élément de bride de support (3), d'un élément pendulaire (1) correspondant est ou peut être amenée en appui, lorsque le pendule centrifuge (1) se trouve dans la plage de température définie, l'élément de friction (61) étant réalisé sensiblement en forme de L ou en forme de T en section transversale.

9. Pendule centrifuge servant à l'amortissement d'irrégularités de rotation d'un arbre d'entraînement d'un moteur à combustion interne, comprenant un élément de bride de support (3) pouvant être relié directement ou indirectement à l'arbre d'entraînement, et comprenant plusieurs éléments pendulaires (5) déplaçables par rapport à l'élément de bride de support (3), chaque élément pendulaire (5) étant déplaçable dans la direction circonférentielle entre une première et une deuxième position de butée par rapport à l'élément de bride de support, **caractérisé en ce qu'**au moins un élément de friction qui présente des caractéristiques de dilatation thermique définies, différentes de celles de l'élément de bride de support (3) et de l'élément pendulaire (5) est associé à au moins un élément pendulaire (5), lequel élément de friction est réalisé et disposé de telle sorte que, dans une plage de température définie du pendule centrifuge (1), lors d'un mouvement en direction d'une position de butée, l'élément pendulaire (5) vient en appui, à l'aide de l'élément de friction côté élément pendulaire, avec l'élément de bride de support (3) avant même d'avoir atteint la position de butée et frotte sur l'élément de bride de support par l'élément de friction de telle sorte que l'énergie cinétique de l'élément pendulaire diminue.

10. Véhicule comprenant un pendule centrifuge selon l'une des revendications précédentes, le pendule centrifuge (1) étant relié directement ou indirectement à un arbre d'entraînement d'un moteur à combustion interne en tant que moteur d'entraînement du véhicule.
